(19) Europäisches Patentamt

European Patent Office

Office européen des brevets

(11) **EP 1 010 913 A2**

(12) **EUROPEAN PATENT APPLICATION**

(43) Date of publication:
21.06.2000 Bulletin 2000/25

(51) Int. Cl.⁷: **F16D 65/095**, F16D 65/097

(21) Application number: **99125123.2**

(22) Date of filing: **16.12.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.12.1998 JP 35818898**

(71) Applicant:
**NISSHINBO INDUSTRIES INC.**
**Chuo-ku, Tokyo (JP)**

(72) Inventor:
**Fujiwara, Yoichi,**
**c/o Nisshinbo Ind., Inc. Nagoya**
**Nagoya-shi, Aichi (JP)**

(74) Representative:
**Henkel, Feiler, Hänzel**
**Möhlstrasse 37**
**81675 München (DE)**

(54) **Disc brake device**

(57)    The object of this invention is to provide a disc brake device which increases a braking force in case of a small application force of braking to completely eliminate an impression or a feeling of delay in the braking effectiveness. To achieve this the invention comprises a servomechanism arranged between a back plate (3b) of at least one of a pair of frictional pads (3) and at least one of torque receiving members (2a) of a fixing member (2) for the frictional pads so as to generate a component of force ($W_2$) in the axial direction of a disc rotor (1). A servo-stop-mechanism is provided which is adapted to stop the operation of the servomechanism when a braking force in the circumferential direction of the disc rotor (1) exceeds a predetermined value and a clearance between the one of the frictional pads (3) and the at least one torque receiving member (2a) is closed. Preferably the servomechanism is formed by a resilient component (10) fixed with one end thereof to one of the frictional pad (3) and the receiving member (2a) and resiliently connected with a free end thereof to the other one of the frictional pad (3) and the receiving member (2a).

**Fig. 3**

## Description

BACKGROUND OF INVENTION

This invention relates to a disc brake device with a braking force servomechanism.

The device of this invention is based on a disc brake device in which a pair of frictional pads provided at both sides of a disc rotor (brake disc) are designed to be pressed in the right angle direction relative to the disc rotor surface by a cylinder device, and this disc brake device comprises a caliper, a circular frictional pad supporting member, and a pair of almost L-shaped links. The caliper is attached to a fixing member of the vehicle so as to be slidable in the right angle direction relative to the disc rotor surface and overrides on the disc rotor, and the frictional pad supporting member is fixed to the fixing member.

At a pair of inner edges of the pad supporting member, parallel to the axial direction of the disc rotor, a pair of notched grooves are formed in the circumferential direction of the disc rotor with an interval; base ends of the pair of links, each top energized to contact with the notched groove by a return spring, are supported at each end of back plates of the pair of frictional pads by pins extending in a direction parallel to the disc rotor surface and also in a right angle direction relative to a pushing direction of the frictional pads.

Then, during braking, either one of the pair of links moves in the direction to reduce the angle between the legs of the L-shaped links (parallel to the axis of the disc rotor) with the pin as the fulcrum, thereby causing a biting phenomenon. Therefore, the friction pads generate servo effects.

The above-explained disc brake device with a servomechanism has the following disadvantages:

A traditional servomechanism is characterized in that servo effects of braking force increase in proportion to a braking application force. Hence, when a braking deceleration is high as in a quick braking action, braking effectiveness becomes unstable due to the irregular increase of the braking force; therefore, it is difficult for a driver to exactly control the braking force to a desired value.

When the braking deceleration is low, in other words, when there is a small application force of braking, almost no servo effect is generated. Especially for a vehicle with all four wheels equipped with disc brake devices, it is difficult for the driver to operate the brake to stop and hold the vehicle on a slope.

In addition, the traditional servomechanism is not able to eliminate the problem of giving the driver an impression or feeling of delay in the braking effect at the initial braking period.

SUMMARY AND OBJECTIVE OF THIS INVENTION

This invention was made to mainly improve the above-mentioned points, and to that end, it is an object of this invention to provide a disc brake device which increases the braking force on a wheel when a small force of braking is applied to eliminate the feeling of delay in the braking effect and which facilitates the operation of braking when stopping on a slope. It is another object of this invention to provide a disc brake device that provides more stable braking force when a large force of the braking is applied.

According to the present invention there is provided a disc brake device as defined in claim 1. Preferred embodiments of the disc brake device are defined in the sub-claims.

BRIEF DESCRIPTION OF THE DRAWINGS

The above and other objects and the attendant advantages of the present invention will become readily apparent by reference to the following detailed description when considered in conjunction with the accompanying drawings wherein:

Figure 1 is an enlarged plan view of the essential portion of the partially broken disc brake device according to Embodiment 1 of this invention;
Figure 2 is a cross-section view of Figure 1 taken along the line II-II;
Figure 3 is an explanation view of the condition in the operation where the braking deceleration is low (servo effect);
Figure 4 is a comparison graph of the efficiency of braking force between the present invention and conventional disc brake devices; and
Figure 5 is an explanation view of Embodiment 2 of this invention.

DETAILED DESCRIPTION OF THIS INVENTION

Embodiment 1

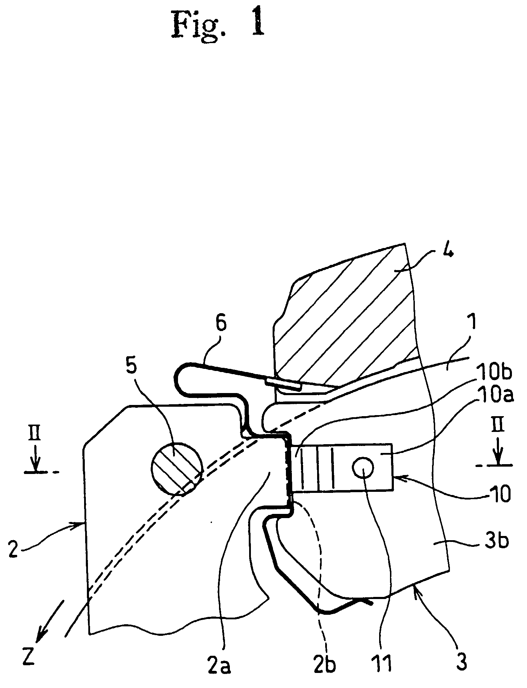

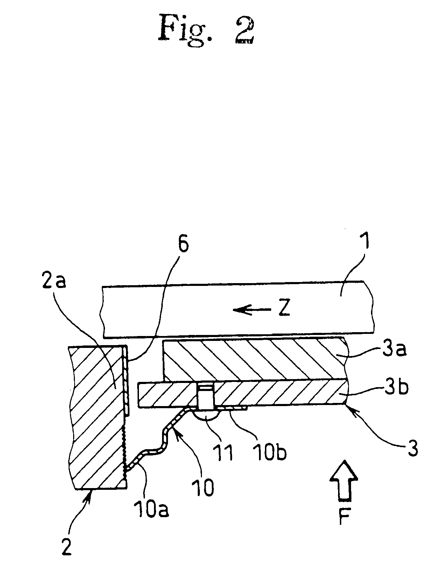

Figure 1 is an enlarged partially broken plan view of the essential portion of a disc brake device. Figure 2 is a cross section view taken along the line II-II.

A disc rotor 1 rotates together with a wheel, and a fixing member, i.e., a carrier 2, is normally fixed on the immovable portion of the vehicle at installation holes (not shown in the figures) by bolts.

A pair of torque receiving members 2a are formed on the carrier 2 with an interval in the circumferential direction of the disc rotor 1. In the following figures, only one side of the disc brake is illustrated and the other side is omitted.

A pair of frictional pads 3 (where only an inner pad is illustrated in the figures but an outer pad is omitted) are provided at both sides of the disc rotor 1 in the axial direction of the disc rotor 1, and each of both end portions of each frictional pad 3 is slidably supported at either one of the pair of torque receiving members 2a in the circumferential direction of the disc rotor 1.

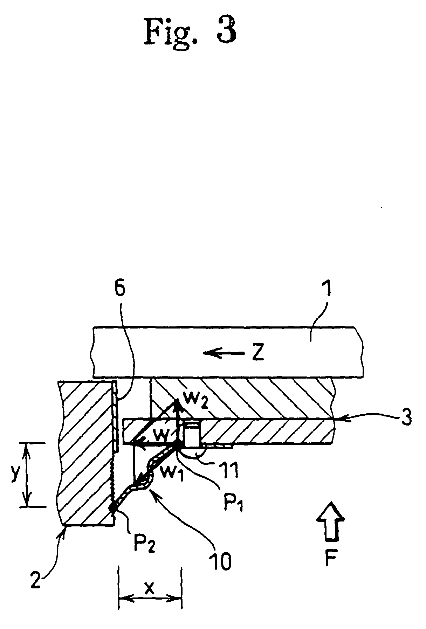

A slight clearance exists between both end portions of each frictional pad 3 and the torque receiving members 2a in the circumferential direction of the disc rotor 1, thereby enabling the movement of the frictional pad 3 in the circumferential direction of the disc rotor 1. Further, as shown in Figures 2 and 3, such a clearance is expressed larger than the actual clearance for the purpose of a better understanding of this invention. However, it must be understood that it is in fact a very small clearance.

The caliper 4 is slidably supported in the axial direction of the disc rotor 1 by a pair of guide pins 5 (where only one side of a guide pin is illustrated in the figures but the other side is omitted) planted either on the caliper 4 or the carrier 2.

In addition, in this embodiment, in order to reduce a sliding resistance of the frictional pad 3, a pad retainer 6 made from anti-rust material is placed between the frictional pad 3 and the torque receiving member 2a. However, the pad retainer 6 is not necessarily an element of this invention.

The frictional pad 3 comprises a frictional material 3a and a back plate 3b to support the frictional material 3a. A later described rivet hole 3c for the installation of a later described resilient piece 10 is formed in the back plate 3b adjacent to the torque receiving member 2a.

The resilient piece 10 is provided to extend between the back plate 3b of the frictional pad 3 and the torque receiving member 2a of the carrier 2 to resiliently connect the back plate 3b and the torque receiving member 2a with each other. The resilient piece 10 may be provided on only one of the frictional pads 3 of the brake device depending upon the desirable braking force when the braking force is small. Otherwise, the resilient piece 10 may be provided both on the inner and outer side-frictional pads 3 (where the outer side is not shown in the figure). All resilient pieces 10 in this invention are similar; therefore, this embodiment describes the resilient piece at only one side with reference to Figures 1 and 2.

As shown in Figures 1 and 2, the resilient piece 10 comprises a fixing portion 10a and a resilient portion 10b formed integrally with the fixing portion 10a. The fixing portion 10a is fixed by force fitting a rivet 11 into the rivet hole 3c on the back plate 3b of the frictional pad 3. The resilient portion 10b with respect to the fixing portion 10a is bent in an angle in the direction to depart from the disc rotor 1. The top section of the resilient portion 10b is resiliently contacted with the torque receiving member 2a of the carrier 2.

A fixing means for fixing the fixing portion 10a to the back plate 3b is not limited to the use of rivet 11, and of course various means or methods may be used to fix the fixing portion 10a. In addition, well known pressing or forming may be used as a method to form the resilient piece 10.

Small teeth 2b, top of which the resilient portion 10b of the resilient piece 10 engages with, are formed on the torque receiving member 2a of the carrier 2. The teeth 2b are designed to be formed so that the top of the resilient portion 10b of the resilient piece 10 would not depart while braking because of its resiliency. The purpose of forming a plurality of teeth 2b is to allow a change of the engagement position of the resilient portion 10b of the resilient piece 10 to adjust the relative movement of the frictional pad 3 toward the disc rotor 1 side following the wear of the frictional pad 3a.

Operation of the disc brake device is explained in the next section.

An arrow Z in Figures 1 and 2 indicates the rotational direction of the disc rotor 1 while the vehicle is moving forward. Upon activation of the brake, i.e. upon application of the braking force when the vehicle is moving forward, a piston inside the caliper 4 (not shown in the figure) pressurizes the inner side-frictional pad 3 against one side of the disc rotor 1, and the counterforce presses the outer side-frictional pad 3 against the other side of the disc rotor 1. When the pair of frictional pads 3 abut against the disc rotor 1, the frictional pads 3 receive a rotational force in the direction of Z and this force is supported at the torque receiving member 2a of the carrier 2 on the left side of the figure, thereby generating a braking force.

Figure 3 shows the condition of low braking deceleration, in other words, a small application force of braking. As shown in Figure 3, the frictional pad 3 is pressed against one side of the disc rotor 1 by operational force F (pressing force of the piston not shown in the figure) in the axial direction of the disc rotor 1, thereby generating a braking force.

At this time, the frictional pad 3 receives a force W in the circumferential direction of the disc rotor 1 when being pressed against the disc rotor 1. This force W acts against a resiliency and thus a resilient force of the resilient piece 10 between the back plate 3b and the torque receiving member 2a of the carrier 2. Then, the force W is divided into a component of the force $W_1$ in the direction of engagement between the resilient portion 10b and the teeth 2b and a component of the force $W_2$ in the axial direction of disc rotor 1.

The frictional pad 3, in addition to the above-described operational force (pressurizing force) F of the piston, is pressed by the component of the force $W_2$ in the axial direction of the disc rotor 1, thereby generating a so called self-servo effect of the braking force.

When the disc rotor 1 is rotating in the reverse direction of Z, i.e. while the vehicle is [in] moving backward, the resilient piece 10 on the other side of the frictional pad 3 (explanation of which is omitted) functions in the same manner as described above, thereby generating the self-servo effect, too. Further, when an increase in the self-servo effect is desirable, another resilient piece may be provided at one or both sides of the outer side-frictional pad, too.

A self-servo effect is provided only when there is a clearance between the torque receiving member 2a of the carrier 2 and the frictional pad 3 due to the resilient force generated by the resilient piece 10 due to its elasticity or resiliency. Accordingly, when the braking deceleration is low ( in case of a small application force of braking), a higher servo-effect is provided, thereby eliminating the problem of delay in the braking effect at the initial braking process and facilitating the operation of braking for stopping a vehicle on a slope.

A servo ratio provided by the resilient piece 10 is considered in the next section.

In Figure 3, the point P1 is a point of the fixing portion 10a of the resilient piece 10 while it is not bent, and the point P2 is a point of abutment between the resilient portion 10b and the torque receiving member 2a. A distance x is a distance from the point PI to the abutment point P2 in the circumferential direction of disc rotor 1, and a distance y is a distance from the undeformed point PI to the abutment point P2 in the axial direction of disc rotor 1. A coefficient $\mu$ is a frictional coefficient between the frictional pad 3 and the disc rotor 1. Then, the linear servo ratio would be expressed in Formula 1:

$$\text{Linear Servo Ratio} = \mu \times \frac{y}{x} \qquad 1$$

and the sum of sequence is expressed in Formula 2:

$$\text{Servo Ratio} = \frac{1}{1-\left[\mu \times \frac{y}{x}\right]} \qquad 2$$

Here, however, no consideration is made as to the frictional resistance to each part. Accordingly, the servo ratio may be changed according to the installation dimension ratio (y/x) of the resilient piece 10.

As the braking force increases with an operational (pressurizing) force F from the piston to the frictional pad 3 exceeding a predetermined value, the resilient portion 10b of the resilient piece 10 cannot withstand such a force and is bent because of its resiliency, thereby letting the frictional pad 3 abut and to be supported against the torque receiving member 2a of the carrier 2.

After the frictional pad 3 abuts to be supported against the torque receiving member 2a of the carrier 2, no component of the force $W_2$ in the axial direction of the disc rotor 1 is created; therefore, no servo effect is triggered. Hence, the standard stable braking effect is obtained in proportion to an operational (pressurizing) force F in the axial direction by the piston.

In addition, for example when the brake is released, a spring installed between a pair of frictional pads helps to depart the frictional pads 3 from the disc rotor 1 to prevent dragging.

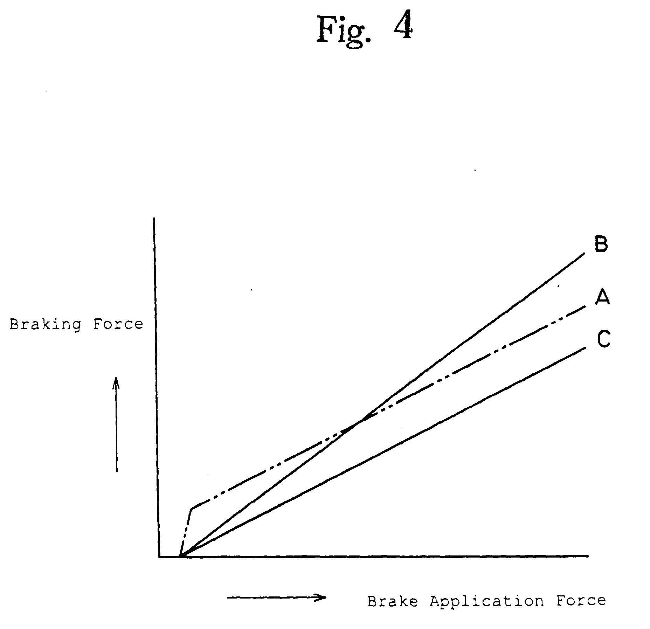

Figure 4 depicts a comparative efficiency graph of braking force for the disc brake device of this invention and the conventional disc brake devices.

An efficiency of this invention providing a combination of a servomechanism and a servo-stop-mechanism is shown as a line A; an efficiency of the conventional disc brake device comprising a servomechanism increasing the servo effect of the braking force in proportion to the application force of braking is shown as a line B; and an efficiency of the conventional disc brake device without a servomechanism is shown as a line C.

According to Figure 4, the efficiency line A of the disc brake device of this invention, compared to the efficiency line B of the disc brake device with the conventional servomechanism, shows the higher servo effect when an initial braking application force is low and shows a lower maintained braking force by ceasing the servo effect when braking deceleration is high, thereby minimizing the instability of the resulting braking force.

Embodiment 2

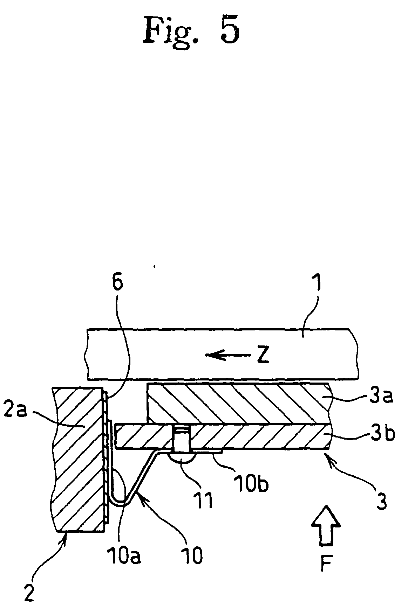

Instead of the teeth 2b formed at the torque receiving member 2a of the carrier 2 as illustrated in the above Embodiment 1, a top section of the resilient piece 10 may be bent to face the torque receiving member 2a as shown in Figure 5.

In this other embodiment, a surface treatment to create a higher coefficient of friction may be conducted on at least either one of the abutment surface between the torque receiving member 2a and the top section of the resilient portion 10b of the resilient piece 10. This treatment providing a higher coefficient of friction, for example, may be a shot blasting to form an uneven surface. Alternatively, a non-slip paint or a plastic coating with high coefficient of friction may be applied, or ceramic or metal may be thermally sprayed.

Embodiment 3

In the above embodiments, one end of the resilient piece 10 is fixed on the back plate 3b of the frictional pad 3 and the other end is resiliently contacted with the torque receiving member 2a of the carrier 2. However, conversely, one end of the resilient piece 10 may be fixed on the torque receiving member 2a of the carrier 2 and the other end resiliently contacted with the back plate 3b of the frictional pad 3.

In addition, the above-described embodiments explain a pin slide type disc brake device employing the carrier 2 as the fixing member (i.e., torque receiving member). However, a fixed caliper type (so called opposed type) disc brake device may be applicable to this invention. In the application of that fixed caliper type, the resilient piece may be placed between the torque receiving member formed on the caliper and the frictional pad.

Further, the above-described embodiments use a single resilient piece. However, the resilient piece does not have to be a single member as long as there are provided resilient means resiliently contacting with either the frictional pad 3 or the torque receiving member 2a.

Still further, this invention may be used for many different types of disc brake devices. At least, the device should comprises a fixing means provided either on the frictional pad 3 or the torque receiving member 2a and a resiliently contacting means provided on the other one, wherein a braking force is supported by the components of the servomechanism when a small application force of braking is applied at the initial braking period but is supported by the torque receiving member 2a when a large braking force is applied.

As is evident from the aforementioned configurations, this invention provides the following advantages:

This disc brake device eliminates a problem of giving the driver an impression or feeling of delay in the braking effect since a servo effect is provided only when an application force of braking is small at the initial braking period.

This disc brake device facilitates the operation of braking for stopping the vehicle on a slope for a vehicle with four disc brakes since the servo effect sufficiently increases a small application force of braking at the initial braking period.

This disc brake device is structured so that when the braking deceleration is high, the servo effect operation is ceased and the braking force is not further amplified, thereby ellminating a problem of unstable braking force.

This disc brake device facilitates a control of braking by providing a stable braking effect either when in low or high braking deceleration.

**Claims**

1.   A disc brake device, comprising:

a pair of frictional pads (3) slidably arranged in the axial direction of a disc rotor (1) for frictionally engaging both axial sides of said disc rotor (1) for braking a vehicle, said frictional pads (3) being arranged with a clearance between a pair of torque receiving members (2a), which torque receiving members (2a) are formed on a fixing member (2) with an interval therebetween in the circumferential direction of said disc rotor (1);

a servomechanism arranged between a back plate (3b) of at least one of said frictional pads (3) and at least one of said torque receiving members (2a) of said fixing member (2) so as to generate a component of force ($W_2$) in the axial direction of said disc rotor (1); and

a servo-stop-mechanism which is adapted to stop the operation of said servomechanism when a braking force in the circumferential direction of said disc rotor (1) exceeds a predetermined value and said clearance between said at least one of the frictional pads (3) and said at least one torque receiving member (2a) is closed.

2.   A disc brake device as claimed in claim 1, wherein said servomechanism further comprises:

a means (11,10a) to fix a base portion of said servomechanism to one of said back plate (3b) of said frictional pad (3) or said torque receiving member (2a); and

a means (10b) to resiliently connect a free portion of said servomechanism to the other one of said frictional pad (3) or said torque receiving member (2a).

3.   A disc brake device as claimed in claim 1 or 2, wherein said servomechanism comprises a resilient piece (10) arranged to provide a predefined resiliency against a movement of said at least one frictional pad (3) in the circumferential direction of said disc rotor (1) during braking operation to thereby generating said component of force ($W_2$) in the axial direction of said disc rotor (1).

4.   A disc brake device as claimed in claim 3 in combination with claim 2, wherein

said servomechanism comprises teeth (2b) formed or provided to said other one of said frictional pad (3) or said torque receiving member (2a) and resilient piece (10) and

said free end of said resilient piece (10) is resiliently connected to said teeth (2b).

5.   A disc brake device as claimed in claim 3 in combination with claim 2, wherein

said servomechanism comprises an abutment surface formed or provided to said other one of said frictional pad (3) or said torque receiving member (2a) and resilient piece (10) and

said free end of said resilient piece (10) is bent so as to face said abutment surface and is resiliently frictionally connected to said abutment surface.

6.   A disc brake device as claimed in any one of claims 1 to 5, wherein said servo-stop-mechanism is formed by said torque receiving member (2a) restricting the movement of said frictional pad (3) in the circumferential direction of said disc rotor (1)

# Fig. 1

# Fig. 2

# Fig. 3

# Fig. 4

# Fig. 5